Europäisches Patentamt

**European Patent Office**

Office européen des brevets

(19)

(11) Veröffentlichungsnummer: **0 026 435
B1**

(12)

# EUROPÄISCHE PATENTSCHRIFT

(45) Veröffentlichungstag der Patentschrift:
15.02.84

(51) Int. Cl.³: **H 02 G 15/18**

(21) Anmeldenummer: **80105714.2**

(22) Anmeldetag: **23.09.80**

(54) Verschlussvorrichtung bei Kabelgarnituren aus wärmeschrumpfbarem Material.

(30) Priorität: **27.09.79 DE 2939241**

(43) Veröffentlichungstag der Anmeldung:
**08.04.81 Patentblatt 81/14**

(45) Bekanntmachung des Hinweises auf die Patenterteilung:
**15.02.84 Patentblatt 84/7**

(84) Benannte Vertragsstaaten:
**AT BE CH DE FR GB IT LI NL SE**

(56) Entgegenhaltungen:
**DE - A - 2 543 358
DE - A - 2 731 578
DE - A - 2 739 330
DE - A - 2 820 181
FR - A - 1 585 488**

(73) Patentinhaber: **SIEMENS AKTIENGESELLSCHAFT,
Berlin und München Wittelsbacherplatz 2,
D-8000 München 2 (DE)**

(72) Erfinder: **Wlcek, Rudolf, Dr. Mach-Strasse 101,
D-8013 Haar (DE)**
Erfinder: **Kunze, Dieter, Dipl.-Ing., Rosenstrasse 10,
D-8021 Neurled (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verschlussvorrichtung bei Kabelgarnituren aus wärmeschrumpfbarem Material

Die Erfindung betrifft eine Verschlussvorrichtung mit klammerartigen Druckmitteln an längsgeteilten Kabelgarnituren aus wärmeschrumpfbarem Material, wobei Verschlusselemente aus schrumpfbarem Material so vorgeformt sind, dass das Verschliessen zunächst leichtgängig erfolgt und dann nach dem Schrumpfvorgang infolge ihrer durch Wärmeeinwirkung erfolgten Zurückverformung von den Druckmitteln spielfrei umfasst und dichtend zusammengepresst sind.

An ungeschnittenen Kabeln zu montierende Schrumpfmuffenteile, wie Muffenköpfe, Muffenrohre bzw. Schrumpfmanschetten müssen an den Teilungsflächen mit Hilfe von Spann- oder Druckmitteln und Kleber, meist Schmelzkleber, unter Ausnutzung der zum Schrumpfen zugeführten Wärme dicht verschlossen werden. Bei Schrumpfmanschetten und Muffenköpfen sind die Teilungsflächen selbst oder auch nur die sich überlappenden Flächen mit Schmelzkleber beschichtet, und auf die neben den Teilungsflächen angeordneten Verschlusselemente in Form von Wülsten werden klammerartige Druckmittel aufgeschoben. So sind Druckmittel bekannt, die z.B. als C-förmige Schienen (DE-A-1 525 815) oder als U-förmige Bügel aus Metall (DE-U-7 423 507) ausgebildet sind. Bei relativ starren Druckmitteln wird eine Spielpassung zwischen den Wülsten des Schrumpfteiles und dem Druckmittel vorgesehen. Dann lässt sich das klammerartige Druckmittel zwar leicht montieren, beim Schrumpfen wird der Kleber aber nicht genügend komprimiert, und es bilden sich unter Umständen zwischen den Teilungsflächen grössere Zwischenräume, die sich nicht sicher mit Kleber ausfüllen lassen. Auch bei sich überlappenden Teilungsflächen ohne Verwendung von Kleber ist eine zu weite Spielpassung von Nachteil, weil die Wülste beim Schrumpfen zu leicht aus der Verklammerung rutschen können. Mit federnden Druckmitteln kann man zwar diesem Nachteil begegnen, doch behindert die notwendige Vorspannung des Druckmittels das Aufschieben auf die Wülste des Schrumpfteiles. In der DE-A-2 543 358 ist nun weiterhin eine wärmerückstellfähige Verschlusseinrichtung mit klammerartigen Druckmitteln an längsgeteilten Einrichtungen aus wärmeschrumpfbarem Material bekannt. Die Verschlusselemente aus schrumpfbarem Material sind dabei so vorgeformt, dass das Aufziehen der Druckmittel leichtgängig erfolgt und nach dem Schrumpfvorgang infolge ihrer durch Wärmeeinwirkung erfolgten Zurückverformung von den Druckmitteln spielfrei zusammengepresst sind. Bei derartigen Anordnungen wird jedoch als Druckmittel ein separates Einzelteil in Form einer Verschlussschiene über die Verschlusselemente gebracht, durch welche die Verschlusselemente erst zusammengeführt bleiben. Weiterhin ist bei einer solchen Anordnung nachteilig, dass sich durch die tangential wirkenden Schrumpfkräfte entlang der Teilungslinie ein Längsspalt ausbilden kann, der die Dichtigkeit beeinträchtigen kann.

So liegt nun dieser Erfindung zunächst die Aufgabe zugrunde, bei Längsverschlüssen von Kabelgarnituren aus schrumpfbarem Material bereits fertig montierte Verschlusselemente zu schaffen, mit denen im ersten Montagezustand ein leichtes Zusammenführen in den Teilungs- bzw. Dichtungsflächen erfolgen kann und die sich dann während des Schrumpfvorgangs selbständig so verändern, dass sich eine spielfreie Passung und Dichtung ergibt.

Diese erste Aufgabe wird mit einer Verschlussvorrichtung der eingangs geschilderten Art gemäss der Erfindung dadurch gelöst, dass die Verschlusselemente ineinander rastend ausgebildet sind, dass nur eines der Verschlusselemente aus schrumpfbarem Material so vorgeformt ist, dass das Einrasten des zweiten Verschlusselementes im ersten Verschlusselement leichtgängig erfolgt und dass das erstgenannte Verschlusselement nach dem Schrumpfvorgang infolge seiner durch Wärmeeinwirkung erfolgten Zurückverformung mit dem zweitgenannten Verschlusselement zu einer spielfreien Abdichtung zusammengepresst ist.

Während bei der bisher beschriebenen Lösung die Verschlusselemente ineinander rastend ausgebildet sind und von einem äusseren Druckmittel zusammengepresst sind, werden in vielen Fällen auch Verschlüsse verwendet, die mit im Inneren angebrachten Stützelementen arbeiten. Eine Kabelmuffe dieser Art ist aus der DE-A1-2 731 578 bekannt. Die dort verwendeten Stützelemente sind in Form von Halbschalen ausgebildet und werden in das Innere der Muffenköpfe eingeschoben, wobei sie mittels Klammern an den Teilungsflächen zusammengehalten werden. Durch diese Klammern müssen jedoch die erforderlichen Schliesskräfte im Trennbereich aufgebracht werden. Das bedeutet jedoch, dass diese Klammern bereits klemmend eingesetzt werden müssen. So ergab sich für vorliegende Erfindung die weitere Aufgabe, eine Verschlussvorrichtung zu schaffen, mit der auch bei Längsverschlüssen an Muffenköpfen von Kabelgarnituren ein leichtes Zusammenführen der Teilungsflächen erfolgen kann und die sich dann während des Schrumpfvorganges selbständig so verändert, dass sich eine spielfreie Dichtung ergibt. Gemäss einer anderen Ausführung der Erfindung wird bei einer Verschlussvorrichtung der eingangs genannten Art die Dichtung mit Verschlusselementen dadurch erreicht, dass das Druckmittel gleichzeitig als Stützkörper in Form eines Stützringes im Inneren eines schrumpfbaren Muffenkopfes ausgebildet ist, dass die Verschlusselemente im Bereich ihrer Teilungsflächen aus schrumpfbarem Material mit Materialüberständen so vorgeformt sind, dass sie nach dem Schrumpfvorgang infolge der durch Wärmeeinwirkung erfolgten Zurückverformung durch den als Druckmittel ausgebildeten Stützring dichtend zusammengepresst sind.

Das Wesentliche an der Erfindung ist darin zu sehen, dass die Verschlusselemente entlang der Teilungsflächen der Kabelgarnituren während des Aufdehnvorganges bei der Fertigung so vorgeformt werden, dass sie zunächst leichtgängig ineinandergefügt werden können. Bei dem anschliessenden Schrumpfvorgang wird die montierte Kabelgarnitur über den Erweichungspunkt erwärmt, so dass sie zu schrumpfen beginnt. Hierbei verformen sich infolge ihres «Formgedächtnisses» die Verschlusselemente in ihre ursprüngliche Form zurück. Diese Form ist so gewählt, dass sie dann dichtend gegeneinander verspannt sind. Ausserdem wird ein gewisser Druck wirksam, der infolge der Umklammerung der Druckmittel auf die Teilungsflächen wirkt und somit den inzwischen erweichten Kleber komprimiert und entsprechend gleichmässig verteilt. Die Formen der Verschlusselemente können vielgestaltig sein, doch muss die Verformung wie bereits erwähnt, so gewählt werden, dass sie im entspannten Zustand nach dem Schrumpfvorgang die Druckmittel verspannen und somit den benötigten Schliess- bzw. Kompressionsdruck erzeugen. Die Verschlusselemente sind nach der ersten Lösung der Erfindung als Wülste entlang der Teilungsflächen ausgebildet, die gegenseitig ineinander rasten. Bei solchen Rastverschlüssen ist nur ein Verschlusselement vorverformt, so dass dieses leicht in das zweite einrasten kann. Durch die Zurückverformung erfolgt dann das gegenseitige Verpressen. Das Vorverformen der Wülste nach der ersten Lösung oder der Teilungsflächen nach der zweiten Lösung lässt sich jeweils am vorteilhaftesten bereits bei der Fertigung im Zusammenhang mit dem Aufdehn- bzw. Reckvorgang ausführen. Dabei sind die zu verformenden Flächen des über dem Erweichungspunkt erwärmten Teils mit entsprechend geformten Spannbacken zu pressen, während die zu dehnenden Bereiche des Teiles pneumatisch oder ebenfalls mechanisch verformt werden.

Die Erfindung wird nun an Hand mehrerer Ausführungsbeispiele näher erläutert.

Die Fig. 1 und 2 zeigen Verschlussvorrichtungen, bei denen die Verschlusselemente ineinander einrasten.

In den Fig. 3 und 4 sind Verschlussvorrichtungen dargestellt, bei denen Teilungsflächen im Verschlussbereich verformt werden.

In der Fig. 5 wird eine fertig montierte Kabelgarnitur mit einem längsgeteilten Muffenzylinder und einem Muffenkopf dargestellt.

Vorweg sei darauf verwiesen, dass in den Figuren die gestrichelte Darstellung den vorgeformten Zustand nach dem Reckvorgang, also vor dem Schrumpfvorgang zeigt. Die ausgezogene Darstellungsweise hingegen zeigt den völlig entspannten Zustand nach freiem ungehindertem Schrumpfen.

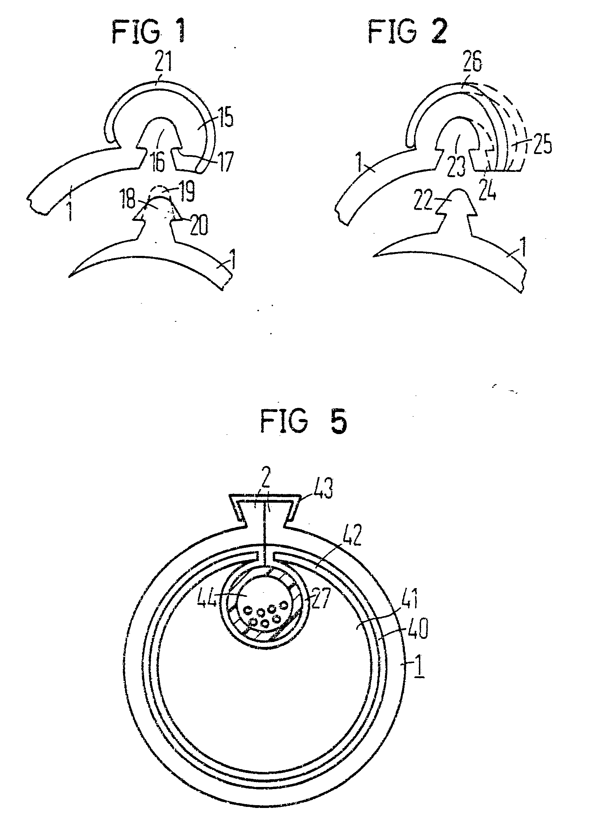

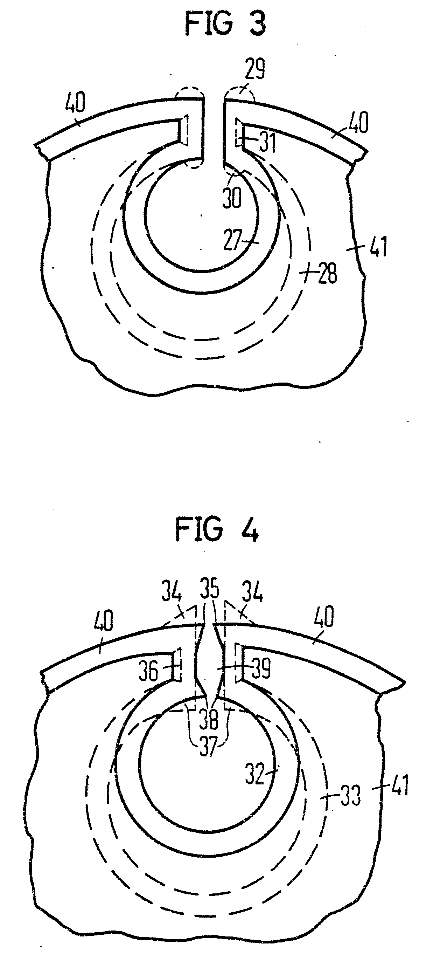

Zunächst wird der gesamte Einsatzbereich der verschiedensten Verschlussvorrichtungen an einer Kabelgarnitur anhand der Fig. 5 näher erläutert. Dort ist zu erkennen, dass das längsgeschlitzte Muffenrohr 1 an seinen Rändern längsverlaufende Wülste in Form der Verschlusselemente 2 aufweist, die in der Teilungsfläche gegeneinandergepresst werden. Dieser Verschluss ist hier nur im Prinzip mit einem klammerartigen Druckmittel 43 dargestellt, das an den hinterschnittenen Seiten der wulstartigen Verschlusselemente 2 eingreift. Hier wird jedoch nach der Erfindung eine Verschlussvorrichtung nach der ersten Lösung eingesetzt, wie sie aus den Fig. 1 und 2 hervorgeht. Doch ist hier in dieser Fig. 5 weiter zu sehen, dass die Kabelgarnitur stirnseitig von einem Muffenkopf 41 abgeschlossen ist. Dieser Muffenkopf 41 weist einen Rand 40 auf, auf den das Muffenrohr 1 dichtend aufgespannt wird. Innerhalb dieses Randes 40 ist konzentrisch ein Stützring eingebracht, der gleichzeitig als Druckmittel 42 für die Verschlussvorrichtung des längsgeschlitzten Kabeleinführungsstutzens 27 des Muffenkopfes 41 dient. Dieses kreisförmige Druckmittel 42 ist im Bereich des Längsschlitzes des Kabeleinführungsstutzens 27 ebenfalls geschlitzt und liegt zunächst bei der Montage lose an den äusseren Wänden der Verschlusselemente. Nach dem Schrumpfvorgang werden die Teilungsflächen des Kabeleinführungsstutzens 27 so verformt, dass das Druckmittel 42 eingeklemmt wird. Auf diese Weise werden die Dichtungsflächen im Schlitzbereich fest gegeneinandergepresst. Die Einzelheiten werden in den Fig. 3 und 4 näher erläutert. Der hier gezeigte Muffenkopf 41 weist einen einzigen Kabeleinführungsstutzen 27 mit einem eingeführten Kabel 44 auf, doch sind auch mehrere solcher Einführungen in der gleichen Weise möglich. Somit ist der Einsatzbereich für die Verschlussvorrichtungen bzw. deren Einzelteile, die in den weiteren Figuren dargestellt sind, umrissen. Ein evtl. eingelegter Kleber wird im geschmolzenen Zustand gleichmässig in den Teilungsflächen verteilt und zugleich komprimiert.

In Fig. 1 ist eine Verschlussvorrichtung gemäss der Erfindung dargestellt, bei der die Ränder des geteilten Muffenrohres 1 mit gegenseitig ineinander rastenden Verschlusselementen 15 und 18 versehen sind. Das Verschlusselement 15 ist als nach aussen weisender Wulst ausgebildet, der eine radial nach innen weisende Nut 16 aufweist. Diese Nut 16 ist zusätzlich mit Hinterschneidungen 17 versehen, so dass sich das dazugehörige zweite Verschlusselement 18 in Form eines der Nut 16 angepassten und mit Spreizansätzen 20 versehenen Wulstes nach dem Eindrücken darin verhakt. Das Verschlusselement 18 ist im Sinne der Erfindung in einem Dehnungsvorgang in eine schlanke Form 19 vorgereckt, so dass die Einführung in die Nut 16 sehr leicht erfolgen kann. Während des Schrumpfvorganges verbreitert sich unter Wärmeeinwirkung das eingerastete Verschlusselement 18 in seine ursprüngliche entspannte Form, so dass es sich in der Nut 16 noch mehr verspreizt. Das federnde Druckmittel 21 über dem Verschlusselement 15 sorgt ausserdem für den bleibenden Druck auf die Dichtungsflächen innerhalb der Nut und gewährleistet eine zusätzliche Sicherung gegen selbständiges Öffnen.

In der Fig. 2 ist ein in seiner Funktion gegenüber der soeben beschriebenen Verschlussvorrichtung umgekehrt wirkendes Ausführungsbeispiel mit gegenseitig einrastenden Verschlusselementen 22 und 24 dargestellt. Hier ist das die hinterschnittene Nut 23 enthaltende Verschlusselement 24 mit einem Formgedächtnis ausgebildet, und zwar so, dass im gereckten Zustand 25 die Nut 23 aufgeweitet ist. Auf diese Weise kann das zweite Verschlusselement 22 bis zum Einrasten problemlos eingeführt werden. Während des Schrumpfvorganges bildet sich die entspannte Form als Verschlusselement 24 aus, d.h. die Nut 23 wird verengt, so dass die Teilungsflächen spielfrei zusammengepresst werden. Das federnde Druckmittel 26 unterstützt diesen Vorgang und dient als Sicherung.

In Fig. 3 wird die Wirkungsweise der Verschlusselemente in der Art von verformten Teilungsflächen bei einem Kabeleinführungsstutzen eines Muffenkopfes 41 erläutert. Bei dem zunächst gereckten Kabeleinführungsstutzen 28 kann das Kabel mühelos eingeführt werden. Bei dem anschliessenden Schrumpfvorgang zieht sich der Kabeleinführungsstutzen auf seine endgültige Form (Kabeleinführungsstutzen 27) zusammen, so dass er fest auf dem Kabel aufsitzt. Im vorgereckten Zustand werden jedoch auch die Teilungsflächen so verformt, dass an beiden Enden geringe Materialüberstände 29 und 30 auftreten. Dafür sind die Wandungen der sich gegenüberliegenden Teilungsflächen in den Bereichen 31 verdünnt, so dass hier der bereits in der Beschreibung von Fig. 5 angedeutete Stützring des Muffenkopfes als Druckmittel ohne Schwierigkeiten eingesetzt werden kann. Während des Schrumpfvorgangs verformen sich die Teilungsflächen zurück, d.h. in diesem Fall nehmen die Wandungen in den Bereichen 31 an Stärke zu und stemmen sich gegen das Druckmittel. Somit wird das Druckmittel verspannt, wobei die Teilungsflächen selbst gegeneinandergepresst werden und evtl. eingebrachter Kleber wird komprimiert. Die endgültige Form ist in der Fig. 3 in der ausgezogenen Darstellung wiedergegeben. Am Muffenkopf 41 ist zusätzlich sein zylindrischer Rand 40 angedeutet, auf den das Muffenrohr aufgesetzt wird.

Die Fig. 4 zeigt schliesslich einen Muffenkopf 41, dessen Teilungsflächen nach einem abgeänderten «Formgedächtnis» verformt wurden. Die Verspannung des Druckmittels erfolgt wie bei dem vorhergehenden Beispiel durch Materialanhäufung in den Wandungsbereichen 36. Die beim Recken zwangsweise erfolgte Verformung in den Bereichen 34 und 37 zielt dahin, dass nach dem Schrumpfen auf die Randbereiche 35 und 38 der Teilungsfläche höherer Druck ausgeübt wird, als im Innenbereich 39. Dadurch wird gewährleistet, dass der im Innenbereich 39 eingebrachte Kleber nicht nach aussen abfliessen kann. Der Kabelstutzen 33 im aufgeweiteten Zustand wird durch das Schrumpfverfahren auf das Kabel aufgepresst und nimmt dem Durchmesser des Kabels entsprechend die Form 32 an.

## Patentansprüche

1. Verschlussvorrichtung mit klammerartigen Druckmitteln (21; 26; 43) an längsgeteilten Kabelgarnituren aus wärmeschrumpfbarem Material, wobei Verschlusselemente (15, 18; 22, 24) aus schrumpfbarem Material so vorgeformt sind, dass das Verschliessen zunächst leichtgängig erfolgt und dann nach dem Schrumpfvorgang infolge ihrer durch Wärmeeinwirkung erfolgten Zurückverformung von den Druckmitteln (21; 26; 43) spielfrei umfasst und dichtend zusammengepresst sind, dadurch gekennzeichnet, dass die Verschlusselemente (15, 18; 22, 24) ineinander rastend ausgebildet sind, dass nur eines der Verschlusselemente (18; 24) aus schrumpfbarem Material so vorgeformt ist, dass das Einrasten des zweiten Verschlusselementes (15; 22) im ersten Verschlusselement leichtgängig erfolgt und dass das erstgenannte Verschlusselement (18; 24) nach dem Schrumpfvorgang infolge seiner durch Wärmeeinwirkung erfolgten Zurückverformung mit dem zweitgenannten Verschlusselement (15; 22) zu einer spielfreien Abdichtung zusammengepresst ist.

2. Verschlussvorrichtung nach Anspruch 1, dadurch gekennzeichnet, dass eines der Verschlusselemente (15; 24) als abstehender, nach aussen liegender Wulst ausgebildet ist und eine längsverlaufende, hinterschnittene Nut (16; 23) aufweist und dass ein zweiter Wulst des anderen Verschlusselementes (18; 22) als längsverlaufende, der Nut (16; 23) angepasste und hinterschnittene Erhebung ausgebildet ist, die in der Nut (16; 23) einrastet.

3. Verschlussvorrichtung nach Anspruch 2, dadurch gekennzeichnet, dass der aussenliegende Wulst von einem Druckmittel (21; 26) umfasst ist.

4. Verschlussvorrichtung mit klammerartigen Druckmitteln an längsgeteilten Kabelgarnituren aus wärmeschrumpfbarem Material, wobei Verschlusselemente aus schrumpfbarem Material so vorgeformt sind, dass das Verschliessen zunächst leichtgängig erfolgt und dann nach dem Schrumpfvorgang infolge ihrer durch Wärmeeinwirkung erfolgten Zurückverformung von den Druckmitteln spielfrei umfasst und dichtend zusammengepresst sind, dadurch gekennzeichnet, dass das Druckmittel gleichzeitig als Stützkörper in Form eines Stützringes (42) im Inneren eines schrumpfbaren Muffenkopfes (41) ausgebildet ist, dass die Verschlusselemente im Bereich ihrer Teilungsflächen aus schrumpfbarem Material mit Materialüberständen (29, 30; 34, 37) so vorgeformt sind, dass sie nach dem Schrumpfvorgang infolge der durch Wärmeeinwirkung erfolgten Zurückverformung durch den als Druckmittel ausgebildeten Stützring (42) dichtend zusammengepresst sind.

## Claims

1. A locking device having clamp-like pressure means (21; 26; 43) on longitudinally-divided cable fittings made of a thermally shrinkable material, in which locking elements (15, 18; 22, 24) made of a shrinkable material are so preformed that the locking process is first carried out in an easy manner and after the shrinking step, as a result of the plastic recovery of the locking means under the influence of heat, they are surrounded by the pressure means (22; 26; 43) so as to be free from play and are pressed together in a sealing fashion, characterised in that the locking elements (15, 18; 22, 24) engage with one another; that only one of the locking elements (18; 24) is so preformed from a shrinkable material that the second locking element (15; 22) easily engages therewith; and that, after the shrinking step, as a result of its plastic recovery under the influence of heat, the first-mentioned locking element (18; 24) is pressed together with the second-mentioned locking element (15; 22) so as to form a seal which is free from play.

2. A locking device according to Claim 1, characterised in that one of the locking elements (15; 24) is in the form of an externally-arranged projecting bead and has a longitudinally-extending undercut groove (16; 23) and that a second bead of the other locking element (18; 22) is shaped as a longitudinally-extending undercut projection which corresponds to and engages with the groove (16; 23).

3. A locking device according to Claim 2, characterised in that the externally-arranged bead is surrounded by a pressure means (21; 26).

4. A locking device having clamp-like pressure means on longitudinally-divided cable fittings made of a thermally shrinkable material, in which locking elements made of a shrinkable material are so preformed that the locking process is first carried out in an easy manner and, after the shrinking step, as a result of the plastic recovery of the locking elements under the influence of heat, they are surrounded by the pressure means and pressed together in a sealing fashion, characterised in that the pressure means is simultaneously constructed as a support body in the form of a support ring (42) within a shrinkable sleeve head (41); that in the region of their surfaces of division, the locking elements are so preformed from a shrinkable material with projections (29, 30; 34, 37) that, after the shrinking step, as a result of the plastic recovery thereof under thermal influence, they are pressed together in sealing fashion by the support ring (42) which is formed as a pressure means.

**Revendications**

1. Dispositif de fermeture à moyens de pression (21; 26; 43) en forme d'agrafes, prévus sur des garnitures de câbles subdivisées longitudinalement et réalisées avec un matériau thermo-rétractable, du type dans lequel des éléments de fermeture (15, 18; 22, 24) en un matériau rétractable sont préformés de telle façon que la fermeture a d'abord lieu facilement et qu'après l'opération de contraction, et par suite de la déformation en retour qui a lieu par l'action de la chaleur, il sont enserrés, sans jeu, et comprimés avec étanchéité par les moyens de pression (21; 26; 43), caractérisé par le fait que les éléments de fermeture (15, 18; 22, 24) sont réalisés de façon à s'encliqueter l'un dans l'autre, qu'un seul des éléments de fermeture (18; 24) en un matériau rétractable est préformé de telle façon que l'encliquetage du second élément de fermeture (15; 22) dans le premier élément de fermeture a lieu facilement, et que l'élément de fermeture (18; 24) mentionné en premier lieu est, après l'opération de contraction et par suite de sa déformation en retour due à l'action de la chaleur, comprimé avec l'élément de fermeture (15; 22) mentionné en second lieu pour fournir une étanchéité sans jeu.

2. Dispositif de fermeture selon la revendication 1, caractérisé par le fait qu'un des éléments de fermeture (15, 24) est réalisé sous la forme d'un bourrelet situé vers l'extérieur et comporte une gorge longitudinale et détalonnée (16; 23), et qu'un second bourrelet de l'autre élément de fermeture (18; 22) est réalisé sous la forme d'une partie saillante, s'étendant longitudinalement, adaptée à la gorge (16; 23) et s'encliquetant dans cette dernière.

3. Dispositif de fermeture selon la revendication 2, caractérisé par le fait que le bourrelet situé à l'extérieur est enserré par un moyen de pression (21; 26).

4. Dispositif de fermeture à moyens de pression (21; 26; 43) en forme d'agrafes, prévus sur des garnitures de câbles subdivisées longitudinalement et réalisées avec un matériau thermo-rétractable, du type dans lequel des éléments de fermeture (15, 18; 22, 24) en un matériau rétractable sont préformés de telle façon que la fermeture a d'abord lieu facilement et qu'après l'opération de contraction, et par suite de la déformation en retour qui a lieu par l'action de la chaleur, ils sont enserrés, sans jeu, et comprimés avec étanchéité par les moyens de pression (21; 26; 43), caractérisé par le fait que le moyen de pression est réalisé en même temps comme corps de soutien, sous la forme d'une bague d'appui (42) à l'intérieur d'une tête de manchonnage (41) rétractable, que les éléments de fermeture sont préformés de telle façon dans la partie intéressant leurs surfaces de séparation avec des parties de matériau saillantes, qu'après l'opération de contraction, et par suite de la déformation en retour qui résulte de l'effet de la chaleur, ils sont comprimés de façon étanche par la bague d'appui réalisée comme moyen de pression.

FIG 1

FIG 2

FIG 5

# FIG 3

# FIG 4